# EUROPÄISCHE PATENTANMELDUNG

(11) **EP 3 029 095 A1**
(43) Veröffentlichungstag der Anmeldung: **08.06.2016**
(21) Anmeldenummer: 14004046.0
(22) Anmeldetag: 01.12.2014
(51) Int. Cl.: C08K 3/22

(54) **Verwendung von subpigmentärem Titandioxid aus einem Synrutilprozess als UV-Absorber**

(71) Anmelder: KRONOS INTERNATIONAL, INC., 51373 Leverkusen (DE)
(72) Erfinder: di Mauro, Leonardo Matteo, 51379 Leverkusen (DE); Medved, Mitja, 51375 Leverkusen (DE); Mersch, Frank, 42799 Leichlingen (DE); Wilkenhöner, Uwe, 42113 Wuppertal (DE)

(57) **Zusammenfassung**

Die Erfindung richtet sich auf die Verwendung von subpigmentärem Titandioxid, welches in einem Synrutilprozess anfällt und aufgrund von Verunreinigungen eine beige- braun-graue oder leicht gelbliche Farbe aufweist, als Absorptionsmittel für UV-Strahlung in Beschichtungen insbesondere in Holzschutzmitteln, in Kunststoffen und Kosmetika. Die erfindungsgemäße Verwendung des subpigmentären Titandioxids aus Synrutilprozessen führt zu folgenden Vorteilen:
- UV-Schutzwirkung im Bereich <400 nm für Rutil und <380 nm für Anatas
- schwach farbgebende Wirkung für Holzschutzmittel
- geringere photokatalytische Aktivität als klassische unbehandelte Titandioxidpigmente auf Basis Anatas
- Kostenersparnis wegen kostengünstiger Produktion des subpigmentären Titandioxids.

## Beschreibung

### Gebiet der Erfindung

Die Erfindung richtet sich auf die Verwendung von subpigmentärem Titandioxid, welches in einem Synrutilprozess anfällt, als Absorptionsmittel für UV-Strahlung in Beschichtungen, Kunststoffen und Kosmetika.

### Technologischer Hintergrund der Erfindung

Unter dem Einfluss von UV-Strahlung laufen in organischen und biologischen Materialien eine Reihe von chemischen Reaktionen ab, die zu chemischer Zersetzung und Verlust an Helligkeit und zu Verfärbungen, Versprödung oder Rissbildung führen. Durch die Verwendung von UV-Absorbern, die als Additiv in Kunststoffen, Beschichtungen oder Kosmetika eingesetzt werden, können die Materialien vor den chemischen Zersetzungsreaktionen geschützt werden.

UV-Absorber absorbieren UV-Strahlung in einem bestimmten Wellenlängenbereich und sind organischer oder anorganischer Natur. Organische UV-Absorber sind üblicherweise teurer als anorganische. Die wichtigsten anorganischen UV-Absorber sind Zinkoxid und Titandioxid mit Partikelgrößen im Nano-Bereich (<100 nm). Titandioxid mit Partikelgrößen von ca. 200 bis 400 nm streut sichtbares Licht sehr effektiv und wird als Weißpigment verwendet. Im subpigmentären (<200 nm) bzw. Nano-Partikelgrößenbereich bei Partikelgrößen von <100 nm ist Titandioxid für das sichtbare Licht jedoch weitgehend transparent. Im Gegensatz zum Streuverhalten ist das UV-Absorptionsverhalten des subpigmentären Titandioxids nur gering von der Partikelgröße abhängig.

Üblicherweise sind UV-Absorber für sichtbares Licht transparent und weisen keine Eigenfärbung auf.

Subpigmentäres bzw. Nano-Titandioxid für den Einsatz als UV-Absorber oder im Katalysebereich wird kommerziell auf unterschiedlichen Wegen hergestellt, beispielweise über einen Sol-Gel-Prozess aus anorganischen Vorläufersubstanzen wie Titanylsulfat oder Titanylchlorid oder aus organischen Vorläufersubstanzen wie Titanalkoxiden oder über einen Gasphasenprozess.

Üblicherweise wird angestrebt, ein reines farbneutrales Produkt herzustellen.

Subpigmentäre Titandioxidpartikel fallen jedoch auch in anderen industriellen Verfahren an, beispielsweise bei der Aufbereitung von Eisentitanerz (Ilmenit) zu synthetischem Rutil in einem sogenannten Synrutil-Prozess, beispielsweise dem Benelite- oder dem Becher-Prozess. Bei diesen Prozessen wird das Ausgangserz mit Säure, beispielsweise Salzsäure gelaugt, und es bilden sich feine Titandioxid-Partikel, i.w. Rutil und untergeordnet Anatas. Die Partikel weisen aufgrund von Verunreinigungen eine beige-braun-graue Farbe auf und sind für den Einsatz als Weißpigment nicht geeignet.

### Aufgabenstellung und Kurzbeschreibung der Erfindung

Der Erfindung liegt die Aufgabe zugrunde, eine Verwendung für subpigmentäres Titandioxid, welches bei der Herstellung von synthetischem Rutil anfällt, anzugeben.

Die Aufgabe wird gelöst durch die Verwendung von subpigmentärem Titandioxid, welches bei der Herstellung von synthetischem Rutil anfällt, als UV-Absorber.

Weitere vorteilhafte Ausformungen der Erfindung sind in den Unteransprüchen angegeben.

### Figuren

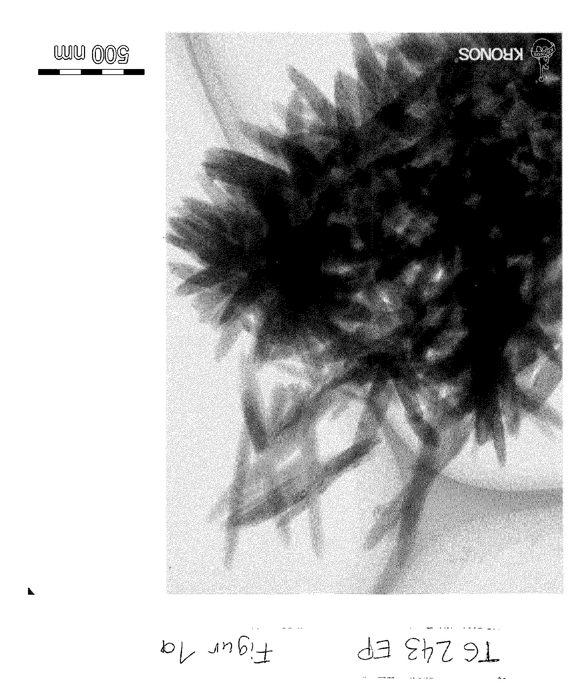

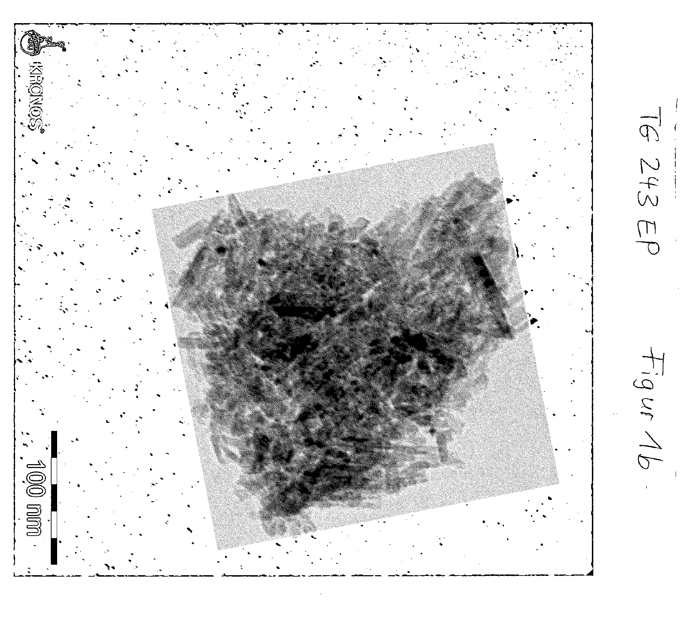

Figur 1a, 1b: Elektronenmikroskop-Aufnahmen von subpigmentärem Rutil aus einem Synrutilprozess.
Figur 2: Transmissionsspektren von Suspensionen gemäß Beispiel 1 und Vergleichsbeispiel 1.

### Beschreibung der Erfindung

Alle im Folgenden offenbarten Angaben bezüglich Größe in µm usw., Konzentration in Gew.-% oder Vol.-%, pH-Wert usw. sind so zu verstehen, dass alle Werte, die im Bereich der dem Fachmann bekannten jeweiligen Messgenauigkeit liegen, mit umfasst sind.

Beim UV-Schutz lässt sich grundsätzlich zwischen Anwendungen zum Substrat- und zum Matrixschutz unterscheiden. Beim Substratschutz ist der UV-Absorber in einem Medium verteilt, das den Untergrund vor UV-Lichteinfall schützen soll, z.B. transparente Holzschutzmittel oder Sonnenschutzmittel für die menschliche Haut.

Holzschutzmittel haben verschiedene Ziele in der Anwendung. Neben einer wasserabweisenden, bioziden oder fungiziden Wirkung ist der UV-Schutz am wichtigsten. Die UV-Strahlung führt zu einem direkten Abbau des Lignins. Das Schadensbild ist anschließend entweder eine silbrig-weiße oder eine schmutzig- graue Färbung des Holzes, was in der Regel unerwünscht ist.

Die Verwendung eines UV-Absorbers mit geringer beige-gelblicher Eigenfärbung in einer Lasur unterstützt dagegen die Eigenfarbe des Holzes und hebt die Maserung positiv hervor. Der erfindungsgemäße UV-Absorber ist zudem preiswerter herzustellen als die bekannten Nano-Titandioxide.

Die Erfindung geht von einem subpigmentären Rutil oder Anatas aus, der im Rahmen eines Synrutilprozesses (z.B. Benelite-Prozess) anfällt. Die Partikel weisen bevorzugt - gegebenenfalls nach Mahlung - eine mittlere Primärpartikelgröße (ermittelt aus Debye-Scherrer- oder Elektronenmikroskopaufnahmen) von weniger als 100 nm, insbesondere weniger als 50 nm auf. Bevorzugt beträgt die spezifische Oberfläche (nach BET) mehr als 70 m²/g. In einer besonderen Ausführung der Erfindung liegen die Primärpartikel in Form von langprismatischen Partikeln vor.

Die erfindungsgemäß verwendeten Titandioxidpartikel weisen bevorzugt einen L*-Wert von etwa 88 und einen b-Wert von etwa 7 auf.

Als Verunreinigungen sind hauptsächlich Fe in Menge von 1 Gew.-%, Si in einer Menge von 0,8 Gew.-%, Al in einer Menge von 0,4 Gew.-% und Mg, Ca, Cr und V in einer Menge von <0,1 Gew.-% vorhanden.

Die erfindungsgemäße Verwendung des subpigmentären Titandioxids aus Synrutilprozessen führt zu folgenden Vorteilen:
- UV-Schutzwirkung im Bereich <400 nm für Rutil und <380 nm für Anatas
- schwach farbgebende Wirkung für Holzschutzmittel
- geringere photokatalytische Aktivität als klassische unbehandelte Titandioxidpigmente auf Basis Anatas
- Kostenersparnis wegen kostengünstiger Produktion des subpigmentären Titandioxids.

Erfindungsgemäß kann das subpigmentäre Titandioxid, welches bei der Herstellung von Synrutil anfällt, als UV-Absorber besonders vorteilhaft in transparenten Holzschutzlasuren, in leicht gefärbten Kunststoffen wie z.B. in getöntem Polycarbonat für Sonnenbrillen oder in kosmetischen Formulierungen mit UV-Schutz (Sonnenschutzmittel) eingesetzt werden.

### Beispiele

Im Folgenden ist die Erfindung beispielhaft beschrieben, ohne dass damit eine Einschränkung der Erfindung verbunden ist.

Es wurde eine Suspension folgender Zusammensetzungen hergestellt:

### Beispiel 1

| | |
|---|---|
| 1. VE-Wasser | 564,50 g |
| 2. Rheolate 420 (Rheologieadditiv) | 6,25 g |
| 3. Byk 023 (Entschäumer) | 2,50 g |
| 4. Solplus D540 (Dispergiermittel) | 120,00 g |
| 5. Acticide IMS (Biozid) | 1,25 g |
| 6. AMP 90 (Dispergiermittel) | 55,50 g |
| 7. Subpigmenter Rutil | 500,00 g |
| gesamt | 1250,00 g |

Der eingesetzte subpigmentäre Rutil entstammte einem Synrutilprozess wie oben beschrieben, war pulverförmig und wies eine langprismatische Kristallform auf. Die mittlere Primärpartikelgröße (ermittelt aus Elektronenmikroskopaufnahmen) betrug in der Länge etwa 20 bis 50 nm und in der Breite etwa 5 bis 10 nm. Die mittlere Partikelgröße d₅₀ (Median, ermittelt mittels Laserbeugung) betrug 93 nm. Die spezifische Oberfläche nach BET betrug etwa 50 bis 80 m²/g. Das Pulver war hellgelb gefärbt.

Die Additive waren handelsüblich und lagen in den handelsüblichen Konzentrationen vor. Die Komponenten 1 bis 6 wurden im Rührbehälter vorgelegt, das Synrutilpulver wurde unter Rühren hinzugefügt. Die Vordispergierung erfolgte im Skandexmischer 60 Minuten lang unter Zugabe von 1,25 kg Mahlperlen (Aluminiumoxid, 3mm). Der End-pH-Wert betrug 8,6. Anschließend wurde die Suspension mit einer Labstar-Rührwerkskugelmühle unter Verwendung von Y-stabilisierten ZrO₂-Perlen (0,2 bis 0,3 mm) 2 Stunden dispergiert. Abschließend wurde die Suspension im Verhältnis 2:1 mit Bayhydrol A145 gemischt, als 30 µm Schicht auf Glas aufgezogen und bei 60°C getrocknet.

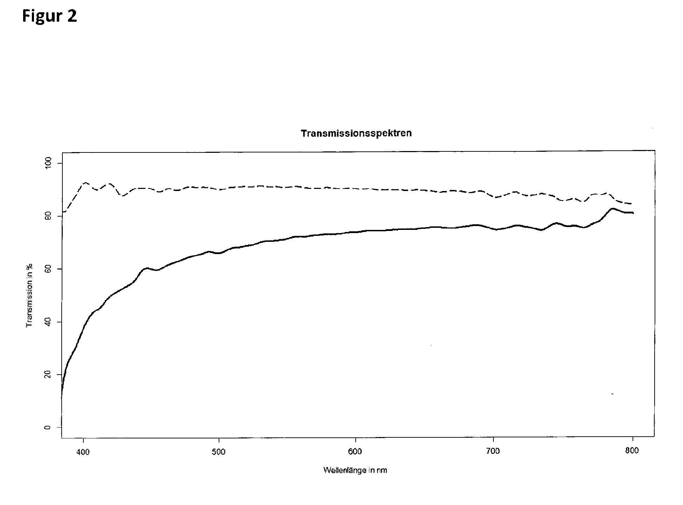

In einem UV-vis Spektrometer (Perkin Elmer Lambda 950) wurde das Transmissionsspektrum der aufgezogenen Lackschicht gemessen (Figur 2).

### Vergleichsbeispiel 1

Wie Beispiel 1 mit dem Unterschied, dass kein subpigmentärer Rutil verwendet wurde und dass die Menge der restlichen Komponenten auf eine Gesamtmenge von 1250 g hochgerechnet wurde.

Wie in Beispiel 1 wurde das Transmissionsspektrum der aufgezogenen Lackschicht gemessen (Figur 2).

Figur 2 zeigt das Transmissionspektrum der auf Glas aufgezogenen Lackschichten mit (durchgezogene Linie) und ohne Synrutil (gestrichelte Linie). Die gestrichelte Linie gibt gleichzeitig das Transmissionsspektrum des Glasträgers ohne Lackschicht wieder. Der

Glasträger weist eine geringe grünliche Tönung und damit eine sehr geringe Absorption im Bereich <450 nm auf. Die Messungen zeigen, dass die Anwesenheit von subpigmentärem Synrutil in dem Lack gemäß Beispiel 1 eine deutliche Absorption im UV-Bereich (<400 nm) bewirkt, ohne dass massive Färbungen außer der erwünschten Gelbtönung auftreten.

## Patentansprüche

1. Verwendung von subpigmentärem Titandioxid, welches bei der Herstellung von synthetischen Rutil anfällt, als UV-Absorber.

2. Verwendung von subpigmentärem Titandioxid nach Anspruch 1, wobei das Titandioxid Rutil ist.

3. Verwendung von subpigmentärem Titandioxid nach Anspruch 1 oder 2 in Holzschutzmitteln.

4. Verwendung von subpigmentärem Titandioxid nach Anspruch 1 oder 2 in Kosmetika.

5. Verwendung von subpigmentärem Titandioxid nach Anspruch 1 oder 2 in Kunststoffen.
